Europäisches Patentamt

European Patent Office

Office européen des brevets

(19)

(11) Publication number : **0 020 154 B2**

# (12) NEW EUROPEAN PATENT SPECIFICATION

(45) Date of publication of the new patent
specification : **03.04.91 Bulletin 91/14**

(51) Int. Cl.$^5$ : **B01J 29/06, C10G 11/05**

(21) Application number : **80301795.3**

(22) Date of filing : **30.05.80**

(54) **Zeolite-containing hydrocarbon cracking catalyst and hydrocarbon cracking process utilizing same.**

(30) Priority : **31.05.79 US 44360**
**31.05.79 US 44394**

(43) Date of publication of application :
**10.12.80 Bulletin 80/25**

(45) Publication of the grant of the patent :
**22.06.83 Bulletin 83/25**

(45) Mention of the opposition decision :
**03.04.91 Bulletin 91/14**

(84) Designated Contracting States :
**BE DE FR GB IT NL**

(56) References cited :
FR-A- 2 348 265
US-A- 3 758 403
US-A- 3 764 520
US-A- 3 769 202
US-A- 3 847 793
US-A- 3 894 934
US-A- 3 925 195
US-A- 4 137 152

(56) References cited :
IND. ENG. CHEM. PROD. RES. DEV., 1978,
17,p. 219
CATALYSTS presented at the 10-15 September 1978 Miami Beach Meeting of the Petroleum Chemistry Inc.: Symposium on Octane in the 1980's
Magee et al "Octane catalysts containing special sieves" in OGJ Report, 27.05.1985, Oil And Gas Journal, p. 59-64

(73) Proprietor : **EXXON RESEARCH AND
ENGINEERING COMPANY**
**P.O.Box 390, 180 Park Avenue**
**Florham Park, New Jersey 07932 (US)**

(72) Inventor : **Gladrow, Elroy Merle**
**9884 Spanish Moss Court**
**Sun City Arizona (US)**
Inventor : **Winter Jr., William Edward**
**1026 Marc Antony**
**Baton Rouge Louisiana (US)**

(74) Representative : **Somers, Harold Arnold et al**
**ESSO Engineering (Europe) Ltd. Patents &
Licences Mailpoint 72 Esso House Ermyn Way
Leatherhead, Surrey KT22 8XE (GB)**

EP 0 020 154 B2

## Description

Zeolite-containing hydrocarbon cracking catalyst and hydrocarbon cracking process utilizing same

The present invention relates to a zeolite-containing hydrocarbon cracking catalyst and a hydrocarbon cracking process utilizing same.

Hydrocarbon cracking catalysts comprising a zeolite dispersed in a siliceous matrix are known See, for example, U.S. Patent 3,140,249 and U.S. Patent 3,352,796.

U.S. Patent 4,137,152 discloses a cracking process utilizing a mixture of faujasite and mordenite

U.S. Patent 3,894,934 discloses catalytic cracking of hydrocarbons utilizing a large pore zeolite and a small pore zeolite such as zeolite ZSM-5. These zeolites may be dispersed in a common matrix.

U.S. Patent 3,871,993 discloses a process for upgrading the octane value of naphtha utilizing a shape selective catalyst such as zeolite ZSM-5, ZSM-11, ZSM-12, ZSM-21, mordenite, etc., in the absence of added hydrogen.

U.S. Patent 3,702,886 discloses use of ZSM-5 zeolite alone or in combination with other materials such as zeolites or inert materials for catalytic cracking of hydrocarbons, see particularly columns 6 and 7.

U.S. Patent 3,804,747 discloses a hydrocarbon conversion process utilizing a mixture of zeolites X and Y.

U.S. Patent 3,758,403 discloses catalytic cracking comprising a large pore zeolite, such as zeolite Y, and a small pore zeolite, such as ZSM-5, in a siliceous matrix. The matrix may be active or inactive, such as silica-alumina or alumina. The use of the ZSM-5 type zeolite results in obtaining a fuel or increased octane number.

U.S. Patent 3,769,202 discloses a combination catalyst comprising a mixture of two different zeolites, one having a pore size greater than 8 Angstroms and the other having a pore size of less than 7 Angstroms. The zeolites are mixed with an inorganic oxide matrix such as silica-alumina. One of the two zeolites may be the acid form of zeolite Y, and the other may be acid mordenite (example 22), rare earth zeolite A (example 41), erionite or chabazite. The catalyst is suitable for cracking and hydrocracking of hydrocarbons.

U.S. Patent 3,925,195 discloses a cracking process utilizing a catalyst comprising a mixture of rare earth hydrogen Y-type zeolite, and hydrogen or transition metal exchanged mordenite, calcium exchanged type A zeolite, or hydrogen exchanged erionite and an amorphous matrix.

U.S. Patent 3,764,520 discloses a catalyst comprising a mixture of two different zeolites, one having a pore size within the range of 6 to 15 Angstroms and the other having a pore size of less than 6 Angstroms in combination with an inorganic oxide support. The catalyst is useful for hydrocarbon conversion processes to give increased selectivity.

French patent FR-A-2348265 discloses a catalyst for the conversion of hydrocarbons comprising : (a) an ultrastable Y-type crystalline-aluminosilicate containing an accelerator for the oxidation of CO ; (b) a zeolite containing rare earth metals ; and (c) a porous inorganic oxide matrix such as silica-alumina. The zeolite component may be mordenite, erionite, chabazite, zeolite A, faujasite, but is preferably zeolite Y.

A paper by Magee and Ritter entitled "Formation of High Octane Gasoline by Zeolite Cracking Catalysts" presented at a symposium of the American Chemical Society (Division of Petroleum Chemistry, Inc), Miami Beach Meeting, September 10-15, 1978, describes the benefits of zeolite-containing cracking catalysts, and refers particularly to new zeolite cracking catalyst compositions manufactured by the Davison division of W.R. Grace and Company under the trade name "Octacat". Octacats are reported in the paper to enhance both olefin and aromatics content in the gasoline range (therefore increasing both research and motor octane) without reducing gasoline yield or coke selectivity. The paper compares the cracking performance of a current commercial zeolite cracking catalyst made by Davison division under the designation CBZ-1 (comprising rare earth Y zeolite in an amorphous matrix) with Octacat using a FCC pilot plant of the type described by Magee and Blazek in "Zeolite Chemistry and Catalysis", Editor J.A. Rabo, (American Chemical Society) monograph 17, pages 645-659, 1976. These comparative tests show Octacats are generally superior cracking catalysts to CBZ-1. The improved performance of the Octacats is attributed, inter alia, to a slowing of the rapid $H_2$ transfer reaction rates usually obtained with zeolitic catalysts whereby more olefins survive the cracking reactions and a reduction in the severe dehydrogenation of cyclic naphthenes to aromatics and coke. Other reaction mechanisms are postulated.

An article by Magee, Cormier and Wolterman in the Oil and Gas Journal, October 1985, pages 59-64, which was published after the priority date of the present patent specification, indicates that a component of Octacat catalysts is an unspecified form of an ultra-stable Y-zeolite.

In accordance with the invention, there is provided a catalyst for the catalytic cracking of hydrocarbons comprising :

(a) Y-type crystalline aluminosilicate zeolite ;

(b) a small pore crystalline metallosilicate zeolite ; and

(c) a catalytic inorganic oxide gel matrix, characterized in that said Y-type aluminosilicate zeolite (a) is an ultrastable Y-type crystalline aluminosilicate zeolite having a unit cell size of less than $2.45 \times 10^{-9}$m (24.5 Angstrom units) and less than 1 weight percent rare earth metals, calculated as the elemental metal, based on the zeolite ; and said small pore metallosilicate zeolite (b) has pore diameters not exceeding $1 \times 10^{-9}$m (10 Angstrom units) and is selected from erionite, mordenite, zeolite A, ZSM-5 type zeolite, chabazite and offretite, and in that said catalyst comprises :

(d) a porous inorganic oxide having substantially no catalytic cracking activity or less catalytic cracking activity than said inorganic gel component (c) and having initially a surface area greater than 20 square meters per gram and a pore volume greater than 0.25 cubic centimeters per gram.

## DETAIL DESCRIPTION OF THE INVENTION

## ULTRASTABLE Y-TYPE ZEOLITE COMPONENT

"Stabilized" or ultrastable Y-type zeolites are well known. They are described, for example, in U.S. Patents 3,293,192 and 3,402,996 and the publication, Society of Chemical Engineering (London) Monograph Molecular Sieves, page 186 (1968) by C.V. McDaniel and P.K. Maher, the teachings of which are hereby incorporated by reference. In general, "ultrastable" refers to a Y-type zeolite which is highly resistant to degradation of crystallinity by high temperature and steam treatment and is characterized by a $R_2O$ content (wherein R is Na, K or any other alkali metal ion) of less than 4 weight percent (preferably less than 1 weight percent), a unit cell size less than $2,45 \times 10^{-9}$m (less than 24.5 Angstrom units *) and a silica to alumina mole ratio in the range of 3.5 to 7 or higher. The ultrastable form of Y-type zeolite is obtained primarily by a substantial reduction of the alkali metal ions and the unit cell size reduction. The ultrastable zeolite is identified both by the smaller unit cell and the low alkali metal content in the crystal structure.

* 1 Angstrom unit ($\text{Å}$) = $1 \times 10^{-8}$ cm.

As is generally Known, the ultrastable form of the Y-type zeolite can be prepared by successively base exchanging a Y-type zeolite with an aqueous solution of an ammonium salt, such as ammonium nitrate, until the alkali metal content of the Y-type zeolite is reduced to less than 4 weight percent. The base exchanged zeolite is then calcined at a temperature of 537.8 to 815.6°C (1000°F to 1500°F) for up to several hours, cooled and thereafter again successively base exchanged with an aqueous solution of an ammonium salt until the alkali metal content is reduced to less than 1 weight percent, followed by washing and calcination again at a temperature of 537.8 to 815.6°C (1000 to 1500°F) to produce an ultrastable zeolite Y. The sequence of ion exchange and heat treatment results in the substantial reduction of the alkali metal content of the original zeolite and results in a unit cell shrinkage which is believed to lead to the ultra high stability of the resulting Y-type zeolite. The particle size of the zeolites is usually in the range of $0.1 \times 10^{-4}$ to $10 \times 10^{-4}$ cms (0.1 to 10 microns), more particularly in the range of $0.5 \times 10^{-4}$ to $3 \times 10^{-4}$ cms (0.5 to 3 microns). For use in the present invention, the ultrastable Y-type zeolite components of the catalyst will be substantially free of rare earth metals such a example cerium, lanthanum, praseodymium, neodymium, promethium, samarium, europium, gadolinium, terbium, dysprosium, holmium, erbium, yttrium, thulium, scandium, lutecium and mixtures thereof. By "substantially rare earth free' is means that the rare earth metal content of the zeolite will be less than 1 weight percent, catculated as the elemental metal, based on the zeolite. Similarly small amounts (1 weight percent) of magnesium or calcium ions may be exchanged into the zeolite.

Suitable amounts of the ultrastable Y-type zeolite in the catalyst of the present invention include from 0.1 to 40 weight percent, preferably from 5 to 25 weight percent, based on the total catalyst.

The Small Pore Zeolite Component

Suitable small pore zeolite components include crystalline metallosilicate zeolites having pore diameters not greater than 10 Angstroms, preferably not greater than 9 Angstroms. Some of these zeolites have elliptical pore openings with a major axis of about 8 to 9 Angstroms and a minor axis of about 5.5 to 7 Angstroms. These zeolites are often referred to being shape selective zeolites.

The zeolites described as being shape selective will preferentially permit the ingress and egress of some types of components from a mixture comprising several types of components. The particular shape selective zeolite that wilt be chosen for use in a given process will depend on the components that it is desired to preferentially sorb into the pores of the zeolite. The small pore zeolite may be a naturally occurring zeolite or a synthetic zeolite. Suitable small pore zeolites include erionite, chabazite, offretite, mordenite, Linde Division of Union Carbide's zeolite designated "Zeolite A" described in U.S. Patent 2,882,243, ZSM-5 type zeolites such as those described in U.S. Patent 3,702,886 and in Nature, 272, pages 437–438, March 30, 1978. The ZSM-5 type zeolite used may be aluminosilicates and gallosilicates. The preferred small pore zeolites for use as component of the present catalysts are mordenite, and ZSM-5 type zeolites.

Mordenite is a zeolite of crystalline alumino-silicate material having a silica to alumina ratio ranging from about 9 : 1 up to greater than 100 : 1 and containing elliptically shaped pores having minor and major axis of about 5.8 and 7.1 Angstroms, respectively. Decationizing mordenite increases the effective axis of the pores to about 8 Angstroms to 10 Angstroms. The original cations of the small pore zeolites can be replaced by ion exchange by methods well known in the art. Part or all of the original cations can be replaced by metal ions, ammonium ions and hydrogen ions. More preferably, the hydrogen form of mordenite or of ZSM-5 type zeolite is utilized as the small pore zeolite component of the catalyst of the present invention. Suitable weight ratio of ultrastable Y-type zeolite to small pore zeolite ranges from about 0.5 : 1 to 10 : 1.

## THE INORGANIC OXIDE GEL MATRIX

Inorganic oxide gels suitable as components of the catalyst of the present invention are amorphous catalytic inorganic oxides such as silica, silica-alumina, silica-zirconia, silica-magnesia, alumina-boria, alumina-titania and the like, and mixtures thereof. Preferably, the inorganic oxide gel is a silica-containing gel ; more preferably the inorganic oxide gel is an amorphous silica-alumina component such as a conventional silica-alumina cracking catalyst, several types and compositions of which are commercially available. These materials are generally prepared as a cogel of silica and alumina or as alumina precipitated on a preformed and preaged silica hydrogel. In general, silica is present as the major component in the catalytic solids present in such gel, being present in amounts ranging from about 55 to about 100 weight percent, preferably silica will be present in amounts ranging from about 70 to 90 weight percent. Particularly preferred are two cogels, one comprising about 75 weight percent silica and 25 weight percent alumina and the other comprising from about 87 weight percent silica and 13 weight percent alumina. The inorganic oxide gel component may suitably be present in the catalyst of the present invention in amounts ranging from about 40 to about 90 weight percent, preferably from about 55 to about 75 weight percent, based on the total catalyst.

## THE POROUS INERT COMPONENT

The porous inert inorganic oxide component of the catalyst of the present invention may be present in the finished catalyst as discrete particles in amounts ranging from about 5 to about 35 weight percent, preferably from about 10 to about 30 weight percent, based on the total catalyst. The inert porous component can be chosen from a wide variety of solid porous catalytically inert materials. The term "catalytically inert" is intended herein to designate that the porous material has substantially no catalytic cracking activity or has less catalytic cracking activity than the inorganic oxide gel component of the catalyst.

Preferably, the inert material will be a bulk material. The term "bulk" with reference to the porous material is intended herein to designate a material which has been preformed and placed in a physical form such that its surface area and pore structure is stabilized so that when it is added to an impure inorganic gel containing considerable amounts of residual soluble salts, the salts will not alter the surface and pore characteristic appreciably, nor will they promote chemical attack on the preformed inert material which could then undergo change. For example, addition of "bulk" alumina will mean a arterial which has been formed by suitable chemical reaction, the slurry of hydrous alumina aged, filtered, dried, washed free of residual salts and then heated to reduce its volatile content to less than about 15 weight percent. If desired, the washed, aged hydrous alumina filter cake can be reslurried with water and used in making the composite catalyst. The resulting inert material is suitable for use as the porous inert material of the present invention. Suitable materials for use as inert material in the catalyst of the present invention include alumina, titania, zirconia, magnesia and mixtures thereof. Preferably, the porous material is a bulk alumina which map additionally be stabilized with from 0.5 to 6 weight percent silica. Alumina stabilized with silica is commercially available. The inert porous material used as a component of the catalyst is one having initially, after heating at 537-8°C (1000°F) in air for six hours, a surface area greater than 20 square meters per gram (B.E.T. method-Brunauer, Emmett and Teller, see Van Nostrand Chemist's Dictionary 1953 edition), preferably greater than 100 $m^2/g$, more preferably at least 200 $m^2/g$ and a pore volume greater than 0.25 cc/g. Desirably, the inert porous material has at least 0.2 cubic centimeters per gram pore volume in pores having diameters ranging from 90 to 200 Angstroms. These stated physical characteristics are those of the porous inert material when taken separately after calcining 6 hours at 537-8°C (1000°F) and prior to being composited with the other components.

Alternatively and optionally, an alumina hydrosol or hydrogel or hydrous alumina slurry may be used, provided that the ultimate porous inert component, when dried and calcined separately has physical characteristics within the above stated ranges.

The catalysts of the present invention may be prepared by any one of several methods. The preferred method of preparing one of the catalysts of the present invention, that is, a catalyst comprising silica-alumina and, as porous inert material, alumina, is to react sodium silicate with a solution of alumina sulfate to form a silica/aluminum hydrogel slurry which is then aged to give the desired pore properties, filtered to remove a considerable amount of the extraneous and undesired sodium and sulfate ions and then reslurried in water. Separately, a bulk alumina may be prepared, for example, by reacting solutions of sodium aluminate and aluminum sulfate, under suitable conditions, ageing the slurry to give the desired pore properties to the alumina, filtering, drying, reslurrying in water to remove sodium and sulfate ions and drying to reduce volatile matter content to less than 15 weight percent. The alumina is then slurried in water and blended, in proper amount, with the slurry of impure silica/alumina hydrogel.

The zeolites are added to this blend. A sufficient amount of each component is utilized to give the desired final composition. The resulting mixtures may be filtered to remove a portion of the remaining extraneous soluble salts therefrom. The filtered mixture is then dried to produce dried solids. The dried solids are subsequently reslurried in water and washed substantially free of the undesired soluble salts. The catalyst is then dried to a residual water content of less than about 15 weight percent.

The catalyst of the present invention is suitable for catalytic cracking. Catalytic cracking with the catalyst of the present invention can be conducted in any of the conventional catalytic cracking manners. Suitable catalytic cracking conditions include a temperature ranging from about 398.9 to 704.4°C (750 to about 1300°F) and at a pressure ranging from about atmospheric to about 689.5 kPa (gauge) (100 psig), typically from about atmospheric to about 137.9 kPa (gauge) (20 psig). The catalytic cracking process may be carried out as a fixed bed, moving bed, ebullated bed, slurry, transferline (disperse phase) or fluidized bed operation. The catalyst of the present invention is especially suitable for use in a fluidized bed and transferline catalytic cracking process. The catalyst may be regenerated at conditions which include a temperature in the range of about 593.3 to 815.6°C (1100°F to about 1500°F), preferably from about 635.0 to 732.2°C (1175° F to about 1350°F).

## Description of the Preferred Embodiments

The following examples are presented to illustrate the present invention.

## Example 1

Comparative experiments were made utilizing prior art catalysts, and catalysts of the present invention. A catalyst, herein designated "Catalyst A", is a commercially available catalyst comprising about 16% rare earth exchanged faujasite dispersed in a matrix of silica-alumina gel and kaolin. Final catalyst A comprises about 2.9 weight percent rare earth metal oxides, based on the total catalyst. The catalyst designated "Catalyst B" is not a catalyst of the present invention. Catalyst B was made as follows : A dilute sodium silicate solution was gelled with the measured addition of carbon dioxide under pressure, aged and then mixed with alum solution, the mix being brought to a pH of about 5.5. In a separate vessel, an aqueous slurry of ball milled, oven dried bulk porous alumina was made. The alumina had a surface area (BET) of about 393 $m^2/g$, a total pore volume of 1.35 cc/g and with a pore volume of 1.09 cc/g in pores ranging from about 90 to 200 Angstroms in diameter. Ball milled, calcined hydrogen form of mordenite was added and finally calcined rare earth exchanged Y faujasite (CREY) was added. The CREY contained 17.3 weight percent rare earth metals calculated as sesquioxides. The two slurries were mixed, colloid milled and spray dried. The composite catalyst was washed free of extraneous soluble salts in a conventional manner using ammonium sulfate solution and decationized water. The catalyst was oven dried and calcined at 537.8°C (1000°F). The final "Catalyst B" comprised about 16.5 weight percent hydrogen mordenite ; 8.5 weight percent CREY ; 20 weight percent bulk porous alumina, and 55% of a silica-alumina gel (75% silica and 25% alumina based on the matrix gel). The final catalyst comprised 1.8 weight percent $RE_2O_3$, that is rare earth metal oxides, based on the total catalyst.

Catalyst C was prepared and evaluated to illustrate more directly the performance of catalyst B with a catalyst of similar composition but which did not comprise a small pore zeolite. Catalyst C was made using the same procedure as catalyst B, that is, portions of the same impure silica/alumina hydrogel, the same bulk porous alumina and rare earth exchanged Y-type faujasites were used, but the mordenite was excluded. Catalyst C comprises about 8.5% calcined rare earth Y faujasite, 29 weight percent bulk porous alumina and 62.5 weight percent silica-alumina gel. Chemical analysis showed catalyst C to contain 1.8 weight percent $RE_2O_3$, 0.16 weight percent $Na_2O$, and 0.60 weight percent $SO_4$. After calcination at 537.8°C (1000°F), catalyst C had a surface area of 353 $m^2/g$ and a pore volume of 0.72 cc/g.

Catalysts A, B and C were each steamed 16 hours at 760.0°C (1400°F) and atmospheric pressure (0 psig) and evaluated for activity in a standard microactivity test. The results are summarized in Table 1. The steamed catalysts were evaluated for cracking performance in a full cycle cracking operation. The unit was a circulating, fluidized catalytic cracking unit with a regenerator and reactor and stripper vessels. It was operated in a once-through fashion, that is, there is no recycle oil mixed with fresh feed. Reactor temperature was 496.1°C (925°F) and regenerator temperature was 596.1°C (1105°F). Feedstock was a 232.2 to 593.3°C (450 to 1100°F) vacuum gas oil. The unit was operated at a constant catalyst to oil ratio of 4. The results are summarized in Table 1. In this experiment the catalysts were compared to a constant 70 volume percent conversion (221.1°C -) (430°F-).

TABLE I

| Catalyst | C | B | A |
|---|---|---|---|
| Catalyst Activity (MAT)[1] | 73.9 | 75.0 | 68.0 |
| Yields and Product Qualities at 70% conversion | | | |
| $H_2$ wt.% | 0.053 | 0.031 | 0.027 |
| $C_3^-$ dry gas, wt.% | 5.7 | 5.7 | 6.6 |
| Total $C_4$, vol.% | 14.6 | 15.2 | 15.1 |
| Butylene, vol.% | 7.0 | 8.7 | 5.5 |
| $C_5$/221.1°C (430°F) naphtha, vol.% | 60.4 | 61.5 | 59.0 |
| RONC (2) | 88.9 | 89.0 | 90.3 |
| MONC (3) | 79.4 | 79.0 | 80.1 |
| $\dfrac{R + M}{2}$ | 84.2 | 84.0 | 85.2 |

(1) Microactivity test. See Oil and Gas Journal, 1966, vol. 64, pages 7, 84, 85, and Nov. 22, 1971, pages 60—68.
(2) RONC Research octane number clear
(3) MONC Motor octane number clear

The data of Table I show that catalyst B, which comprises mordenite but is not a catalyst of the present invention, was slightly more active than catalyst C, which is a catalyst used for comparison since it has a similar composition except for the omission of mordenite. Catalyst B also produced less hydrogen and coke and produced more butylenes than catalyst C. Although mordenite seems to have contributed to the cracking activity of catalyst B, it did not produce a naphtha of higher octane number than catalyst C, which was the catalyst used for comparison or the reference catalyst A.

Example 2

A catalyst of the invention, herein designated "Catalyst D", was made in a manner similar to "Catalyst B" as follows : An aqueous slurry of ball milled, uncalcined porous alumina having surface area and pore properties similar to the alumina used in making catalysts B and C of Example 1, was made and to this slurry was added first a commercially available low soda (0.12% $Na_2O$) ultrastable Y-type faujasite (USY), then the desired amount of calcined, ball milled hydrogen form of mordenite. The mixed slurry was then blended with a slurry of impure silica-alumina hydrogel made as described in Example 1. The bulk alumina added to the slurry was a preformed bulk alumina stabilized with about 2.5 weight percent silica which on calcination at 537.8°C (1000°F) had a surface area (BET) of 523 m²/g, a pore volume of 1.07 cc/g. a pore volume of 0.21 cc/g in pores having diameter in the range of 90 to 200 Angstroms. The catalyst was spray dried to produce microspheres, washed free of extraneous soluble salts, dried and calcined at 537.8°C (1000°F). The catalyst, designated "Catalyst D", which is a catalyst in accordance with the present invention, had a composition of about 10 weight percent ultrastable Y zeolite ; 10 weight percent hydrogen mordenite ; 20 weight percent bulk porous silica stabilized alumina and 60 weight percent silica-alumina gel (said gel having a composition of 75 weight percent silica and 25 weight percent alumina). The weights of the individual components are based on the total catalyst. Chemical analysis showed $Na_2O$ content of 0.04% and a $SO_4$ content of 0.57%.

## Example 3

Catalyst E is also a catalyst of reference. It was made by making a mixed aqueous slurry of commercially available low soda (0.12 weight percent $Na_2O$) ultrastable Y faujasite and ball milled uncalcined bulk porous silica stabilized alumina (same alumina as the one used in making catalyst D) blending the slurry with a slurry of impure silica-alumina hydrogel (made as described in Example 1), spray drying the composite to form microspheres, washing the material to remove extraneous soluble salts, drying and calcining at 537.8°C (1000°F). Catalyst E comprised 20 weight percent ultrastable Y-type faujasite, 20 weight percent bulk porous alumina, 60 weight percent silica-alumina gel. Chemical analysis showed an $Na_2O$ content of 0.08 weight percent and a sulfate content of 0.11 weight percent.

Catalysts D and E were each steamed 16 hours at 760.0°C (1400°F) and atmospheric pressure (0 psig) and evaluated for activity in a standard microactivity test. The results are summarized in Table II. The steamed catalysts were also evaluated for cracking performance in a catalytic cracking unit previously described in Example 1, and at the same conditions as given in Example 1. In this set of tests, the feed used was a 293.3/565.6°C (560/1050°F) vacuum gas oil. Results of the experiments with Catalyst D are compared with the reference catalysts, that is, catalysts "A" and "E" in the same cracking unit at a constant 70 volume percent 221.1°C⁻ (430°F⁻) conversion. The results are summarized in Table II.

TABLE II

| Catalyst | A | D | E |
|---|---|---|---|
| Catalyst Activity (MAT) | 69. | 71.6 | 73.5 |
| **Product Yields and Qualities** | | | |
| Coke, wt.% | 3.5 | 2.5 | 2.7 |
| $H_2$, wt.% | 0.06 | 0.10 | 0.06 |
| $C_3^-$ dry gas, wt.% | 5.6 | 7.2 | 6.4 |
| $C_3H_6$, wt.% | 3.7 | 4.7 | 4.4 |
| Total $C_4$, vol.% | 13.1 | 13.3 | 11.8 |
| $C_4H_8$ (tot.), vol.% | 6.8 | 8.0 | 7.6 |
| $C_5$/ 221.1°C (430°F), vol.% | 60.7 | 60.5 | 62.0 |
| RON Clear | 90.8 | 93.9 | 93.8 |
| MON Clear | 79.8 | 81.5 | 80.5 |
| $\dfrac{R + M}{2}$ | 85.3 | 87.7 | 87.2 |
| $C_5$/221.1°C (430°F), incl. alkylate, vol.% | 82.0 | 87.0 | 87.0 |

Catalyst D, which is a catalyst in accordance with the present invention, produced less coke, more light olefins, and higher naphtha octanes than either reference catalyst A, which contained rare earth faujasite, or reference catalyst E, which had a higher ultrastable Y zeolite content than catalyst D but no small pore zeolite (i.e. mordenite). If the increased $C_3$ and $C_4$ olefin yields are considered as potential alkylate, the combined $C_5$/221.1°C (430°F). cracked naphtha and alkylate naphtha yield for catalyst D is the same as for reference catalyst E and significantly higher than for reference catalyst A. It is surprising that mordenite, when present

7

with ultrastable Y-type zeolite in catalyst D, gave a substantially higher octane number increase than that obtained when combined with rare earth Y faujasite (CREY) in catalyst B (see Table I) which produced no apparent octane improvement relative to reference catalyst C or relative to a convenional prior art commercial catalyst A.

## Example 4

This example describes the preparation of catalysts. Their cracking performance is described in a subsequent example.

Catalyst A is the commercially used catalyst described in Example 1 believed to comprise about 16 weight percent of rare earth-containing Y-type faujasite, about 28 weight percent kaolin and about 56 weight percent silica-alumina gel matrix. The final catalyst comprises about 2.9 weight percent rare earth metal oxides, based on the total catalyst. Catalyst A is a catalyst of reference.

Catalyst F is also a catalyst of reference. It was made as follows :

(a) a dilute sodium silicate solution (about 5 weight percent $SiO_2$) was gelled by admixing with $CO_2$ under pressure, aging the gel to give the desired pore properties-admixing with aluminum sulfate solution and adjusting the pH of the impure gel to about 5 to 5.5 ;

(b) the gel is admixed with a slurry of ultrastable Y faujasite crystals and then a slurry of bulk alumina stabilized with about 2.5 weight percent silica. The composite slurry was colloid milled twice to assure homogeneity and spray dried ;

(c) the material was washed with ammonium sulfate solution to remove extraneous soluble salts, rinsed with $H_2O$ and dried. The catalyst comprised about 20 weight percent ultrastable Y-type faujasite, 20 weight percent alumina and 60 weight percent silica-alumina gel.

Catalyst G, which is a catalyst in accordance with the present invention, was made in a manner similar to catalyst F except that in step (b), the gel was admixed with a mixed slurry of ultrastable Y zeolite and a zeolite similar to the zeolite described in the literature as ZSM-5. The overall preparation procedure was the same as for catalyst F. Catalyst G comprises about 18 weight percent ultrastable Y-type zeolite, 2 weight percent of a ZSM-5 type zeolite, 20 weight percent bulk alumina and 60 weight percent silica-alumina gel.

Catalyst H, which is a catalyst in accordance with the present invention, was made in a similar manner to catalyst G except that the relative proportions of ultrastable Y-type faujasite and ZSM-5 type zeolite were changed. Catalyst H comprised about 15 weight percent ultrastable Y-type zeolite, 5 weight percent of a ZSM-5 type zeolite, 20 weight percent bulk alumina stabilized with silica and 60 weight percent silica-alumina gel.

## Example 5

This example compares the cracking performance and the cracked product qualities of the catalysts of the present invention, namely, catalysts G and H, with the reference catalysts A and F. Catalysts A, F, G and H were each calcined at 537.8°C (1000°F) for 6 hours and then steamed at 760.0°C (1400°F) and atmospheric (0 psig) pressure for 16 hours. The catalysts were evaluated for cracking activity in a standard microactivity test. The results are summarized in Table III. The catalysts were also evaluated for cracking performance in a full cycle cracking operation. The unit is circulating fluidized catalytic cracking unit with a regenerator and reactor/stripper vessels. It is operated once-through, that is, there is no recycle oil mixed with fresh feed. Reactor temperature was 496.1°C (925°F) and regenerator temperature was 596.1 °C (1105°F). The feedstock was a 293.3 to 565.6°C (560 to 1050°F) boiling range (at atmospheric pressure) vacuum gas oil. The unit was operated at a constant catalyst to oil weight ratio of 4. The results of one set of tests utilizing catalysts A, F and H are summarized in Table III. The catalysts were compared at a constant 70 volume percent conversion (430°F −). The results show that reference catalyst F and catalyst H, which is a catalyst in accordance with the present invention, each gives substantially higher activity and superior octane number $C_5$/221.1°C (430°F) naphtha relative to the commercial reference catalyst A. Furthermore, use of the higher $C_3$ and $C_4$ olefin products as feed to an alkylation unit would result in a substantial net increase in total naphtha yield for both catalysts F and D relative to catalyst A. Comparing catalyst H with reference catalyst F (which has the same components except for the ZSM-5 type zeolite), it can be seen that the addition of the ZSM-5 type zeolite to the catalyst resulted in a substantial increase in naphtha octane numbers. It is to be noted that the increase in motor octane is greater than the increase in research octane.

TABLE III

| Catalyst | A | F | H |
|---|---|---|---|
| MAT Conversion[3] | 69 | 73.5 | 76.7 |
| Yields & Product Qualities @ 70% Conversion | | | |
| $H_2$, wt.% | 0.056 | 0.062 | 0.042 |
| $C_3^-$ dry gas, wt.% | 5.6 | 6.4 | 8.1 |
| Total $C_4$, vol.% | 13.1 | 11.8 | 16.9 |
| Coke, wt.% | 3.5 | 2.7 | 3.0 |
| $C_5$/221.1°C (430°F) Naphtha, vol.% | 60.5 | 62 | 55 |
| RONC (1) | 90.8 | 93.8 | 95.2 |
| MONC (2) | 79.8 | 80.5 | 83.1 |
| $\dfrac{R + M}{2}$ | 85.3 | 87.2 | 89.2 |
| $C_3=$, vol.% | 3.7 | 4.4 | 6.3 |
| $C_4=$, vol.% | 6.8 | 7.6 | 11.3 |
| $C_5$/221.1°C (430°F) + Alk., vol.% | 82.0 | 87.0 | 91.4 |

(1) Research Octane Number Clear
(2) Motor Octane Number Clear
(3) Microactivity Test — see Oil & Gas Journal, 1966, Vol. 64, pp. 7, 84, 85 and Nov. 22, 1971, pp. 60—68.

In a second set of experiments, catalysts F, G and H after steaming at 760.0°C (1400°F), were tested for cracking performance in a similar manner to the one described above. The results are summarized in Table IV. The catalysts were compared at a constant 65 volume percent conversion (221.1°C-) (430°F-).

## TABLE IY

| Catalyst | F | G | H |
|---|---|---|---|
| ZSM-5 type, wt. % | 0 | 2 | 5 |
| USY type, wt. % | 20 | 18 | 15 |

Product Yields and
Qualities at 65 vol. %
Conversion

| | F | G | H |
|---|---|---|---|
| $H_2$, wt. % | 0.08 | 0.04 | 0.03 |
| $C_3H_6$, wt. % | 3.6 | 4.7 | 5.4 |
| $C_4H_8$ (tot), vol. % | 7.0 | 8.4 | 10.6 |
| Carbon, wt. % | 2.5 | 2.0 | 2.5 |
| $C_5$ / 221.1°C (430°F) vol. % | 58.5 | 55.5 | 53.0 |
| RON Clear | 93.4 | 94.4 | 94.8 |
| MON Clear | 80.3 | 80.9 | 81.2 |
| $\frac{R + M}{2}$ | 86.8 | 87.7 | 88.0 |
| $C_5$ / 221.1°C (430°F) alkylate vol. % | 80.3 | 83.0 | 85.9 |

The advantages of incorporating minor amounts of ZSM-5 type of zeolite into cracking catalysts comprising ultrastable Y-type faujasite, bulk alumina and silica-alumina gel are shown by higher octane number cracked naphtha and, when combined with alkylate from the cracked light olefins, a potentially substantially higher total naphta yield. Furthermore, hydrogen yields are decreased with the catalysts of the present invention.

## EXAMPLE 6

Catalysts H, G, F and I were each steamed 16 hours at 760.0°C 1400°F and atmospheric pressure (0 psig) and evaluated for activity in a standard microactivity test. The steamed catalysts were evaluated for cracking performance in a full cycle cracking operation. The unit was a circulating, fluidized catalytic cracking unit with a regenerator and reactor and stripper vessels.

It was operated in a once-through fashion, that is, there is no recycle mixed with the feed. Reactor temperature was 496.1°C (925°F) and regenerator temperature was 596.1°C (1105°F). The feedstock was a 232.2 to 593.3°C (450 to 1100°F) vacuum gas oil. The unit was operated at a constant catalyst to oil ratio of 4. The results are summarized in Table V. Catalysts H and G are catalysts of the invention.

EP 0 020 154 B2

TABLE V

| Catalyst | H | G | F | I |
|---|---|---|---|---|
| | 15% USY | 18% USY | 20% USY | 8.5 REY |
| | 5% ZSM-5 | 2% ZSM-5 | 20% Al$_2$O$_3$ | 5% ZSM-5 |
| | 20% Al$_2$O$_3$ | 20% Al$_2$O$_3$ | 60 wt. % | 86.5 wt. % |
| | -----60 wt. % silica-alumina---- | | silica-alumina | silica-alumina |
| 221.1°C⁻ (430°F⁻) Conversion, vol. % at 496.1°C (925°F) 10 gm/min. feed rate | 68.4 | 60.9 | 64.8 | 59.4 |
| Product Yields § Qualities | | | | |
| Coke, wt. % | 2.8 | 2.6 | 2.6 | 2.8 |
| Dry Gas, wt. % | 8.1 | 6.1 | 4.8 | 6.4 |
| Total C$_4$, vol. % | | | | |
| C5 221.1°C (430) Naphta, vol. % | 54.5 | 52.7 | 57.5 | 49.3 |
| RONC (1) | 95.0 | ~94.2 | 91.8 | 91.2 |
| MONC (2) | 82.4 | 81.4 | 80.4 | 79.9 |

(1) Research octane number clear
(2) Motor octane number clear

EXAMPLE 7

Catalysts J and K, of which catalyst J is in accordance with the present invention, were each steamed and evaluated for activity in a standard microactivity test using the same unit and conditions described in Example 6. The feed utilized was the same feed, i.e., a 232.2 to 543.3°C (450 to 1100°F) vacuum gas oil, as the one used in Example 6. The results are summarized in Table VI. As can be seen from the data, catalyst J which comprised additional porous inorganic oxide, i.e. alumina, and is a preferred catalyst of the invention, gave a naphtha of higher research octane number clear than catalyst K which did not comprise a separately added alumina.

TABLE VI

| Catalyst | J | K |
|---|---|---|
| | 15% USY | 15% USY |
| | 5% ZSM-5 | 5% ZSM-5 |
| | 20% $Al_2O_3$ | 80 wt. % |
| | 60 wt. % | silica-alumina |
| | silica-alumina | |
| Catalyst Activity (MAT) | 59.7 | 54 |
| 211.1°C (430°F) Conversion, vol. % 10 gm/min., 496.1°C (925°F) | 48.7 | 36.9 |
| Coke, wt. % | 2.6 | 2.2 |
| Dry Gas $C_3$-, wt. % | 4.8 | 3.7 |
| Total $C_4$, vol. % | 10.1 | 7.1 |
| $C_5$ / 221.1°C (430°F) Naphta, vol. % | 41.1 | 30.9 |
| RONC (1) | 94.7 | 93.6 |
| MONC (2) | 79.5 | 79.5 |

(1)   Research octane number clear
(2)   Motor octane number clear

**Claims**

1. A catalyst for the catalytic cracking of hydrocarbons comprising :
(a) Y-type crystalline aluminosilicate zeolite ;
(b) a small pore crystalline metallosilicate zeolite ; and
(c) a catalytic inorganic oxide gel matrix, characterized in that said Y-type aluminosilicate zeolite (a) is an ultrastable Y-type crystalline aluminosilicate zeolite having a unit cell size of less than $2.45 \times 10^{-9}$ m (24.5 Angstrom units) and less than 1 weight percent rare earth metals, calculated as the elemental metal, based on the zeolite ; and said small pore metallosilicate zeolite (b) has pore diameters not exceeding $1 \times 10^{-9}$ m (10 Angstrom units) and is selected from erionite, mordenite, zeolite A, ZSM-5 type zeolite, chabazite and offretite, and in that said catalyst comprises :
(d) a porous inorganic oxide having substantially no catalytic cracking activity or less catalytic cracking activity than said inorganic gel component (c) and having initially a surface area greater than 20 square meters per gram and a pore volume greater than 0.25 cubic centimeters per gram.

2. The catalyst of claim 1 characterized in that said porous inorganic oxide has initially a surface area greater than 100 square meters per gram and at least 0.2 cubic centimeter per gram of its pore volume in pores having diameter in the range of from $9 \times 10^{-9}$ m (90 to 200 Angstrom units).

3. The catalyst of claim 1 or claim 2 characterized in that said porous inorganic oxide is selected from alumina, titania, zirconia, magnesia and any mixtures thereof.

4. The catalyst of any one of claims 1 to 3 characterized in that said porous inorganic oxide comprises alumina stabilized with from 0.5 to 6 weight percent silica.

5. The catalyst of any one of claims 1 to 4 characterized in that the weight ratio of said ultrastable Y-type zeolite to said small pore zeolite is in the range of from 0.5 : 1 to 10 : 1.

6. The calalyst of any one of claims 1 to 5 characterized in that said small pore metallosilicate zeolite is the hydrogen form of said small pore zeolite.

7. The catalyst of any one of claims 1 to 6 characterized in that said matrix comprises silica-alumina.

8. The catalyst of any one of claims 1 to 7 characterized by comprising from 0.1 to 40 weight percent of said ultrastable Y-type zeolite.

9. A catalytic cracking process which comprises contacting a hydrocarbonaceous feed at catalytic cracking conditions in the absence of added hydrogen with a catalyst characterized in that the process is performed in the presence of a catalyst in accordance with any one of claims 1 to 8.

## Ansprüche

1. Katalysator zum katalytischen Cracken von Kohlenwasserstoffen, der umfaßt :
(a) Kristallinen Aluminosilikat-Zeolith vom Y-Typ ;
(b) einen kleinporigen kristallinen Metallsilikat-Zeolith ; und
(c) eine katalytische Gel-Matrix aus anorganischem Oxid, **dadurch gekennzeichnet**, daß der Y-Typ Aluminosilikat-Zeolith (a) ein kristallines Aluminosilikat-Zeolith vom ultrastabilen Y-Typ ist, der eine Einheitszellgröße von weniger als 2,45 × $10^{-9}$ m (24,5 Å) und weniger als 1 Gew.-% Seltenerdmetalle, berechnet als elementares Metall und bezogen auf den Zeolith, aufweist, daß der kleinporige Metallsilikat-Zeolith (b) einen Porendurchmesser hat, der 1 × $10^{-9}$ m (10 Å) nicht übersteigt und unter Erionit, Mordenit, Zeolith A, ZSM-5-Typ Zeolith, Chabasit und Offretit ausgewählt ist, und dadurch, daß der Katalysator
(d) ein poröses anorganisches Oxid mit im wesentlichen keiner katalytischen Crackwirkung oder weniger katalytischer Crackwirkung als die anorganische Gel-Komponente (c) und anfangs mit einer Oberfläche größer als 20 m²/g und einem Porenvolumen größer als 0,25 cm³/g, umfaßt.

2. Katalysator nach Anspruch 1, **dadurch gekennzeichnet**, daß das poröse anorganische Oxid anfangs eine Oberfläche größer als 100 m²/g aufweist und mindestens 0,2 cm³/g seines Porenvolumens in Poren mit einem Durchmesser im Bereich von 9 × $10^{-9}$ – 20 × $10^{-9}$ m (90 bis 200 Å) vorliegen.

3. Katalysator nach Anspruch 1 oder 2, dadurch gekennzeichnet, daß das poröse anorganische Oxid unter Aluminiumoxid, Titandioxid, Zirkondioxid, Magnesiumoxid und irgendeiner Mischung davon ausgewählt wird.

4. Katalysator nach einem der Ansprüche 1 bis 3, **dadurch gekennzeichnet**, daß das poröse anorganische Oxid Aluminiumoxid umfaßt, das mit 0,5 bis 6 Gew.-% Siliciumdioxid stabilisiert ist.

5. Katalysator nach einem der Ansprüche 1 bis 4, **dadurch gekennzeichnet**, daß das Gewichtsverhältnis des Zeoliths vom ultrastabilen Y-Typ zu dem kleinporigen Zeolith im Bereich von 0,5 : 1 bis 10 : 1 beträgt.

6. Katalysator nach einem der Ansprüche 1 bis 5, **dadurch gekennzeichnet**, daß das kleinporige Metallsilikat Zeolith die Wasserstofform des kleinporigen Zeoliths ist.

7. Katalysator nach einem der Ansprüche 1 bis 6, **dadurch gekennzeichnet**, daß die Matrix Siliciumdioxid-Aluminiumoxid umfaßt.

8. Katalysator nach einem der Ansprüche 1 bis 7, **dadurch gekennzeichnet**, daß er 0,1 bis 40 Gew.-% des Zeoliths vom ultrastabilen Y-Typ umfaßt.

9. Katalytisches Crack-Verfahren, bei dem ein Kohlenwasserstoffzufluß unter katalytischen Crack-Bedingungen in Abwesenheit von zugesetztem Wasserstoff mit einem Katalysator kontaktiert wird, **dadurch gekennzeichnet**, daß das Verfahren in Gegenwart eines Katalysators gemäß einem der Ansprüche 1 bis 8 durchgeführt wird.

## Revendications

1. Catalyseur pour le craquage catalytique d'hydrocarbures, ce catalyseur comprenant :
(a) une zéolite d'aluminosiliacte cristallin, de type Y ;
(b) une zéolite de métallosilicate cristallins, à pores fins,
(c) une matrice d'un gel d'oxyde inorganique catalytique, catalyseur catalysé en ce que ladite zéolite (a) d'aluminosiliacte de type Y est une zéolite d'aluminosilicate critsllin de type Y, ultrastable, ayant une taille de cellule unitaire de moins de 2,45 × $10^{-9}$ m (24,5 unités Anström) et contenant moins de 1% en poids de métaux des terres rares, pourcentage calculé en métal élémentaire, par rapport à la zéolite ; et ladite zéolite (b) de métallosilicate à pores fins a des diamètres de pores n'excédant pas 1 × $10^{-9}$ m (10 unités Angström et elle est choisie parmi l'érionite, la mordénite, la zéolite A, une zéolite de type ZSM-5, la chabazite et l'offretite, et en ce que ledit catalyseur comprend :

(d) un oxyde inorganique poreux n'ayant sensiblement pas d'activité de craquage catalytique ou ayant une activité de craquage catalytique inférieure à celle dudit composant (c) de gel inorganique et ayant initialement une surface spécifique supérieure à 20 mètres carrés par gramme et un volume de pores supérieur à 0,25 centimètre cube par gramme.

2. Catalyseur selon la revendication 1, caractérisé en ce que ledit oxyde inorganique poreux a initialement une surface spécifique supérieure à 100 mètres carrés par gramme, et au moins 0,2 centimètre cube par gramme du volume de ses pores consiste en des pores ayant des diamètres compris entre 9 × $10^{-9}$ m et 20 × $10^{-9}$ m (90 à 200 unités Angstrom).

3. Catalyseur selon la revendication 1 ou la revendication 2, caractérisé en ce que ledit oxyde inorganique poreux est choisi parmi l'alumine, l'oxyde de titane, l'oxyde de zirconium, la magnésie et l'un quelconque de leurs mélanges.

4. Catalyseur selon l'une quelconque des revendications 1 à 3, caractérisé en ce que l'oxyde inorganique poreux comprend de l'alumine stabilisée avec de 0,5 à 6% en poid de silice.

5. Catalyseur selon l'un quelconque des revendications 1 à 4, caractérisé en ce que le rapport pondéral de la zéolite de type Y ultrastable à la zéolite a pores fins est compris entre 0,5 : 1 et 10 : 1.

6. Catalyseur selon l'une quelconque des revendications 1 à 5, caractérisé en ce que la zéolite de métallosilicate à pores fins est la forme hydrogénée de la zéolite à pores fins.

7. Catalyseur selon l'une quelconque des revendications 1 à 6, caractérisé en ce que la matrice comprend de la silice alumine.

8. Catalyseur selon l'une quelconque des revendications 1 à 7, caractérisé en ce qu'il comprend de 0,1 à 40% en poids de la zéolite de type Y ultrastable.

9. Procédé de craquage catalytique comprenant la mise d'une charge hydrocarbonée en contact avec un catalyseur, dans des conditions de craquage catalytique en l'absence d'hydrogène ajouté, procédé caractérisé en ce que le procédé est effectué en présence d'un catalyseur selon l'une quelconque des revendications 1 à 8.